# NEUE EUROPÄISCHE PATENTSCHRIFT

(11) **EP 1 958 807 B2**
(45) Veröffentlichungstag und Bekanntmachung des Hinweises auf die Entscheidung über den Einspruch: **18.01.2012**
(45) Hinweis auf die Patenterteilung: 26.08.2009
(21) Anmeldenummer: 08009958.3
(22) Anmeldetag: 24.11.2005
(51) Int. Cl.: B60J 1/16

(54) **Schiebefenster, insbesondere für ein Kraftfahrzeug**
Sliding window, in particular for a vehicle
Vitre coulissante, en particulier pour un véhicule

(30) Priorität: 21.12.2004 DE 102004061567
(43) Veröffentlichungstag der Anmeldung: 20.08.2008
(62) Teilanmeldung aus: 05025666.8
(73) Patentinhaber: DURA Automotive Body & Glass Systems GmbH, 58840 Plettenberg (DE)
(72) Erfinder: Kraus, Jürgen, 58802 Balve (DE); Schulte, Martin, 58802 Balve (DE); Rau, Holger, 51580 Reichshof (DE)
(74) Vertreter: Zinnecker, Armin

(56) Entgegenhaltungen:
- DE-A1- 19 911 022
- DE-U1- 29 922 215
- FR-A1- 2 829 971
- US-A1- 2004 160 082

## Beschreibung

Die Erfindung betrifft ein Schiebefenster für ein Fahrzeug, insbesondere für ein Kraftfahrzeug, mit einem beweglichen Fenster, das in Führungen verschieblich geführt ist. Die Erfindung betrifft ferner ein Fahrzeug, insbesondere ein Kraftfahrzeug mit einem derartigen Schiebefenster.

Ein derartiges Schiebefenster ist aus der EP 0 968 862 A2 bekannt. Es kann in die Karosserie oder in eine Türe eines Fahrzeugs, insbesondere eines Kraftfahrzeugs, eingebaut werden.

Bei diesem und anderen vorbekannten Schiebefenstern für Fahrzeuge verlaufen die Führungen für das bewegliche Fenster parallel zueinander und im Abstand voneinander. Ferner sind die Führungen parallel zu den Kanten des feststehenden Karosserieteils oder des feststehenden Fensters vorgesehen.

Es gibt allerdings auch Fahrzeuge oder Kraftfahrzeuge, bei denen die von außen sichtbaren Kanten nicht parallel zueinander verlaufen. Dies bedeutet, daß der Abstand paralleler Führungsschienen und damit die Größe oder Höhe des beweglichen Fensters nach dem kleinsten vorhandenen Bauraum ausgerichtet werden muß.

Aus der DE 550 546 ist ein Schiebefenster für ein Kraftfahrzeug nach dem Oberbegriff des Anspruchs 1 bekannt.

Die DE 199 11 022 A1 offenbart ein ähnliches Schiebefenster für ein Kraftfahrzeug.

Aufgabe der Erfindung ist es, ein verbessertes Schiebefenster für ein Fahrzeug, insbesondere für ein Kraftfahrzeug, vorzuschlagen.

Erfindungsgemäß wird diese Aufgabe durch die Merkmale des Anspruchs 1 gelöst. Die Führungen für das bewegliche Fenster verlaufen in einem Winkel zueinander. Für das bewegliche Fenster ist eine Längenausgleichseinrichtung vorgesehen. Die Längenausgleichseinrichtung ist geeignet, den sich ändernden Abstand zwischen dem beweglichen Fenster und einer oder beiden Führungen auszugleichen, der entsteht, wenn das bewegliche Fenster bewegt wird.

Die Längenausgleichseinrichtung umfaßt eines oder mehrere Ausgleichselemente.

Die Erfindung ist dadurch gekennzeichnet, daß eines oder mehrere oder alle Ausgleichselemente eine Feder und/oder ein federnd wirkendes Bauteil umfassen oder daraus bestehen.

Vorteilhafte Weiterbildungen sind in den Unteransprüchen beschrieben.

Eine vorteilhafte Weiterbildung ist dadurch gekennzeichnet, daß eines oder mehrere oder alle Ausgleichselemente einem Dämpfer und/oder ein dämpfend wirkendes Bauteil umfassen oder daraus bestehen.

Gemäß der Erfindung sind die Führungen an einem feststehenden Fenster vorgesehen und mit dem feststehenden Fenster verklebt. Das feststehende Fenster kann in eine Öffnung in der Karosserie oder in einer Türe oder Klappe des Fahrzeugs oder Kraftfahrzeugs eingesetzt sein. Es kann dort insbesondere mit der Karosserie oder der Tür oder der Klappe verklebt sein. Vorteilhaft ist es, wenn die Karosserie oder Tür oder Klappe im Bereich des äußeren Randes des feststehenden Fensters eine Einziehung aufweist, so daß die Außenfläche des feststehenden Fensters mit der angrenzenden Außenfläche der Karosserie oder Tür oder Klappe fluchtet. Ferner ist es vorteilhaft, wenn die Außenfläche des beweglichen Fensters mit dem feststehenden Fenster oder dem sonstigen feststehenden Teil des Fahrzeugs oder Kraftfahrzeugs fluchtet.

Ein Fahrzeug, insbesondere Kraftfahrzeug, gemäß der Erfindung ist durch ein erfindungsgemäßes Schiebefenster gekennzeichnet.

Ausführungsbeispiele der Erfindung werden nachstehend anhand der beigefügten Zeichnung im einzelnen erläutert. In der Zeichnung zeigt
- Fig. 1: ein Kraftfahrzeug in einer Seitenansicht,
- Fig. 2: ein vorbekanntes Schiebefenster für ein Kraftfahrzeug,
- Fig. 3: eine nicht beanspruchte erste Ausführungsform eines Schiebefensters mit einer schwenkbar gelagerten Führung in einer Seitenansicht,
- Fig. 4: eine erfindungsgemäß abgewandelte Ausführungsform des Schiebefensters gemäß Fig. 3,
- Fig. 5: das Schiebefenster gemäß Fig. 4 in einer weiteren Seitenansicht im geschlossenen Zustand,
- Fig. 6: das Schiebefenster gemäß Fig. 4 und 5 im geöffneten Zustand,
- Fig. 7: eine zweite Ausführungsform eines erfindungsgemäßen Schiebefensters mit Ausgleichselementen zwischen dem beweglichen Fenster und einer Führung in einer Seitenansicht im geschlossenen Zustand,
- Fig. 8: das Schiebefenster gemäß Fig. 7 im geöffneten Zustand und
- Fig. 9: eine dritte Ausführungsform eines erfindungsgemäßen Schiebefensters mit jeweils zwei Ausgleichselementen zwischen dem beweglichen Fenster und beiden Führungen.

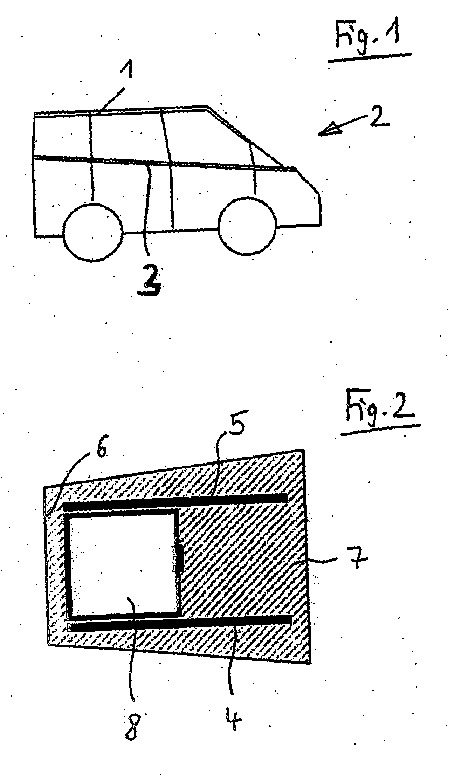

Bei dem in Fig. 1 gezeigten Kraftfahrzeugdesign verlaufen die von der Seite sichtbaren Kanten, nämlich die horizontale Dachlinie 1 und die in der Mitte des Kraftfahrzeugs 2 verlaufende Linie 3 in einem Winkel von etwa 5° bis 20° zueinander. Bei einem vorbekannten Schiebefenster, das in Fig. 2 in einer Seitenansicht dargestellt ist, verlaufen die Führungen 4, 5 parallel zueinander und in einem Abstand voneinander. Der Abstand der parallelen Führungsschienen 4, 5 muß dann nach dem kleinsten Bauraum ausgelegt werden, also nach der Höhe der kürzeren Seite 6 des feststehenden Fensters 7. Die Höhe und die Fläche des beweglichen Fensters 8 sind entsprechend begrenzt. Ferner unterscheidet sich das rechteckige oder quadratische Design des beweglichen Fensters 8 vom konischen Design des feststehenden Fensters 7, was zu einer nachteiligen "Optik" des gesamten Erscheinungsbilds führt.

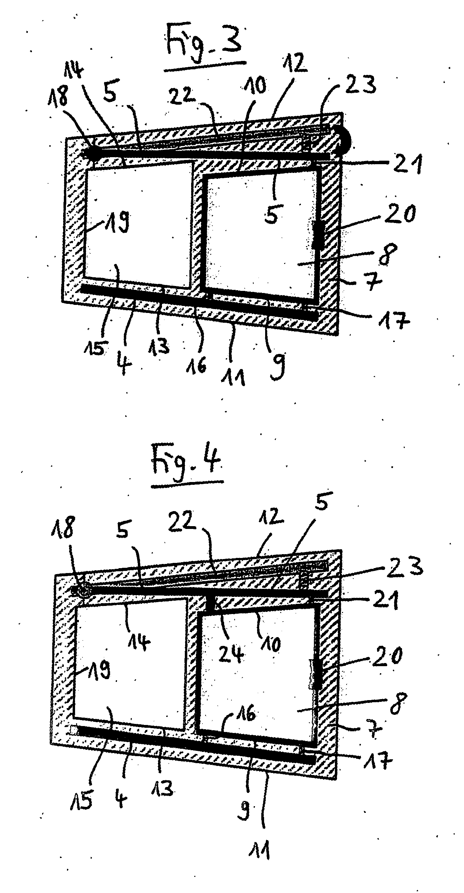

Bei der in Fig. 3 bis 6 gezeigten, ersten Ausführungsform ist das bewegliche Fenster 8 in einer unter Führung 4 und einer oberen Führung 5 verschieblich geführt. Der untere Rahmen 9 und der obere Rahmen 10 des beweglichen Fensters 8 verlaufen konisch, also in einem von null verschiedenen Winkel zueinander. In entsprechender Weise verlaufen die untere Kante 11 und die obere Kante 12 des feststehenden Fensters 7 ebenfalls in einem von null verschiedenen Winkel zueinander, vorzugsweise im selben Winkel wie der untere Rahmen 9 und der obere Rahmen 10 des beweglichen Fensters 8 und die untere Kante 13 und die obere Kante 14 des Ausschnitts 15 im feststehenden Fenster 7.

Wie aus Fig. 3 ersichtlich ist der untere Rahmen 9 des beweglichen Fensters 8 durch zwei Führungsbolzen 16, 17 in der unteren Führung 4 geführt. Die obere Führung 5 ist um eine horizontal verlaufende Achse 18, die im Bereich der hinteren Kante 19 des Ausschnitts 15 liegt, schwenbar gelagert. Die Achse 18 liegt in einem geringen Abstand über dem oberen Ende der hinteren Kante 19. Wenn das bewegliche Fenster 8 durch einen Zug an seinem Handgriff 20 aus der über dem Ausschnitt 15 liegenden Stellung in die in Fig. 3 gezeigte Stellung überführt wird, in der das Schiebefenster geöffnet ist, schwenkt die obere Führung 5 in der aus Fig. 3 ersichtlichen Weise nach unten. Auf diese Weise wird ein Längenausgleich für den oberen Führungsbolzen 21, mit dem der obere Rahmen 10 in der oberen Führung 5 geführt ist, erzeugt. Der Führungsbolzen 21 bleibt in seiner Länge unverändert. Der Längenausgleich erfolgt durch die schwenkbare Lagerung der oberen Führung 5.

Zwischen der schwenkbar gelagerten Führung 5 und dem Führungshalter 22 ist ein Ausgleichselement 23 vorgesehen, nämlich eine Feder, inbesondere eine Druckfeder, oder ein federndes Element. Der Führungshalter 22 ist mit dem feststehenden Fenster 7 verklebt. Er verläuft in einem Winkel zur unteren Führung 4.

Bei der in Fig. 4 bis 6 gezeigten Abwandlung ist ferner zwischen der schwenkbar gelagerten Führung 5 und dem beweglichen Fenster 8 ein weiteres Ausgleichselement 24 vorgesehen, bei dem es sich ebenfalls um eine Feder, vorzugsweise eine Druckfeder, oder ein federndes Element handeln kann.

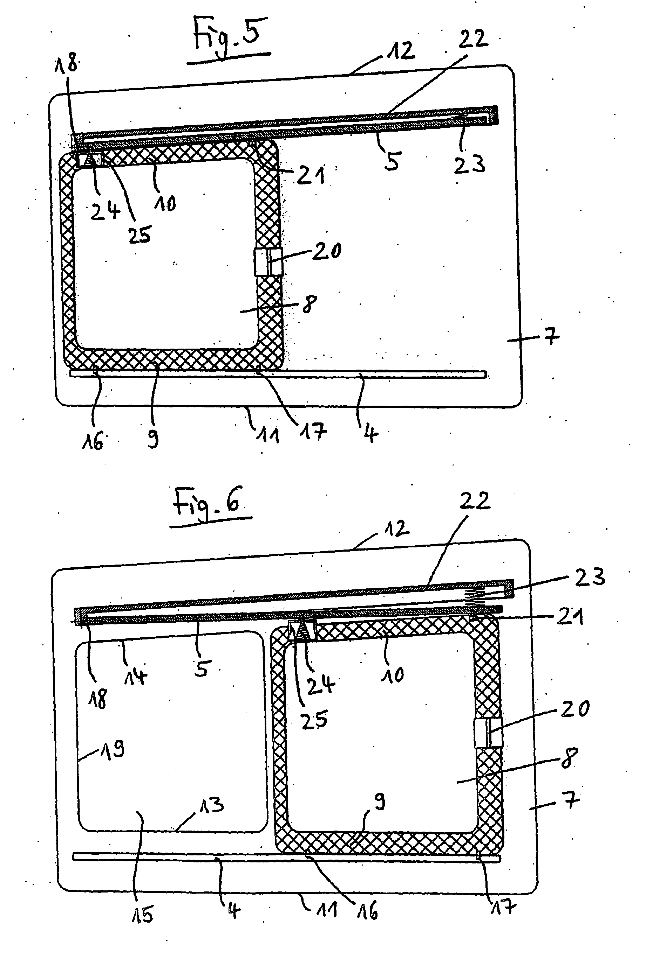

In den Figuren 5 und 6 sind weitere Einzelheiten der Abwandlung gemäß Fig. 4 gezeigt. Das Ausgleichselement 23 besteht aus einer Druckfeder. Das weitere Augleichselement 24 besteht ebenfalls aus einer Druckfeder, nämlich einer Spiralfeder, deren unteres Ende mit dem oberen Rahmen 10 des beweglichen Fensters 8 verbunden ist und deren oberes Ende mit dem Grund eines topfförmigen Bauteils 25 verbunden ist, welches an der Unterseite der oberen Führung 5 befestigt ist. Das topfförmige Bauteil 25 ist in einer entsprechenden topfförmigen Außenführung in dem oberen Rahmen 10 des beweglichen Fensters 8 geführt.

Der Führungshalter 22 ist mit der Innenseite des feststehenden Fensters 7 verklebt. An einem Ende des Führungshalters 22 ist die Schwenkachse 18 für die obere Führung 5 vorgesehen. Die das Ausgleichselement 23 bildende Druckfeder ist mit ihrem oberen Ende an der Innenseite des Führungshalters 22 und mit ihrem anderen Ende an der schwenkbaren Führung 5 befestigt.

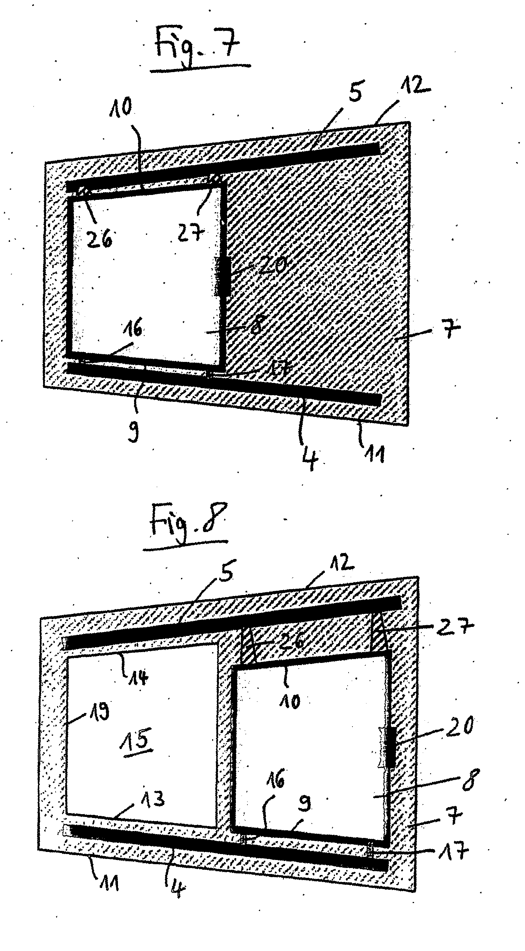

Bei der in Fig. 7 und 8 gezeigten, zweiten Ausführungsform sind beide Führungen 4, 5 mit der Innenseite des feststehenden Fensters 7 verklebt. Wenn das bewegliche Fenster 8 aus der in Fig. 7 gezeigten, geschlossenen Stellung, in der es den Ausschnitt 15 abdeckt, in die in Fig. 8 gezeigte, offene Stellung, in der der Ausschitt 15 freigegeben wird, verschoben wird, erfolgt der Längenausgleich, also der Ausgleich des sich vergrößernden Abstandes zwischen der oberen Kante 10 des beweglichen Fensters 8 und der oberen Führung 5, durch Ausgleichselemente 26, 27, die zwischen dem oberen Rahmen 10 des beweglichen Fensters 8 und der oberen Führung 5 vorgesehen sind. Der untere Rahmen 9 des beweglichen Fensters 8 ist durch Führungsbolzen 16, 17 in der unteren Führung 4 geführt. Bei den Ausgleichselementen 26, 27 kann es sich um federnde Elemente, insbesondere Spiralfedern, handeln.

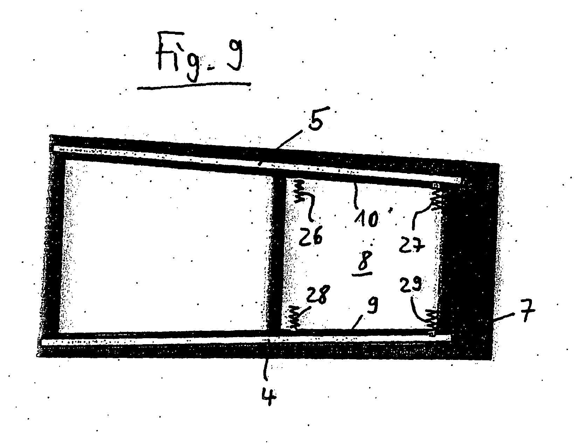

Bei der in Fig. 9 gezeigten, dritten Ausführungsform sind sowohl mit dem unteren Rahmen 9 als auch mit dem oberen Rahmen 10 des beweglichen Fensters 8 jeweils zwei Ausgleichselemente 28, 29 und 26, 27 verbunden.

Durch die Erfindung kann eine höhere Ausnutzung der Durchsicht durch das Kraftfahrzeugfenster erreicht werden. Die Designmöglichkeiten werden verbessert. Es ist eine verbesserte Anpassung an den Fahrzeug-Rohbau möglich. Wenigstens an einer Seite des beweglichen Fensters, also oben oder unten, oder auch an beiden Seiten, ist ein Längenausgleich vorgesehen. Vorteilhaft ist es, den Ausschnitt für das bewegliche Fenster im schmaleren Bereich des feststehenden Fensters vorzusehen, wie in den Zeichnungsfiguren dargestellt. Es ist allerdings auch die umgekehrte Anordnung möglich, bei der der Ausschnitt für das bewegliche Fenster im breiteren bzw. größeren Bereich des feststehendes Fensters vorgesehen ist und das bewegliche Fenster zum Öffnen in den schmaleren Bereich verschoben wird.

Vorteilhaft ist es, wenn der Längenausgleich nur auf einer Seite des beweglichen Fensters vorgenommen wird. In diesem Fall wird das bewegliche Fenster parallel zu einer Führung verschoben. Es ist allerdings auch möglich, auf beiden Seiten des beweglichen Fensters einen Längenausgleich vorzusehen, wie insbesondere in Fig. 9 gezeigt.

## Patentansprüche

1. Schiebefenster für ein Fahrzeug, insbesondere für ein Kraftfahrzeug, mit einem beweglichen Fenster (8), das in Führungen (4, 5) verschieblich geführt ist, die in einem Winkel zueinander verlaufen, wobei für das bewegliche Fenster (8) eine Längenausgleichseinrichtung (24; 26, 27; 28, 29) vorgesehen ist, die zwischen dem beweglichen Fenster (8) und einer Führung (5) eines oder mehrere Ausgleichselemente (24; 26, 27; 28, 29) umfaßt,
**dadurch gekennzeichnet,**
**daß** eines oder mehrere oder alle Ausgleichselemente (24; 26, 27; 28, 29) eine Feder und/oder federndes Element umfassen oder daraus bestehen
und **daß** die Führungen (4, 5) an einem feststehenden Fenster (7) vorgesehen sind, wobei die Führungen (4, 5) mit der Innenseite des feststehenden Fensters (7) verklebt sind.

2. Fahrzeug, insbesondere Kraftfahrzeug, **gekennzeichnet durch** ein Schiebefenster nach Anspruch 1.

## Claims

1. Sliding window for a vehicle, in particular for a motor vehicle, with a movable window (8) which is guided displaceably in guides (4, 5) which run at an angle to each other, wherein a length-equalizing device (24; 26, 27; 28, 29) is provided for the movable window (8) , said length-equalizing device comprising one or more equalizing elements (24; 26, 27; 28, 29) between the movable window (8) and a guide (5),
**characterized in that**
one or more or all of the equalizing elements (24; 26, 27; 28, 29) comprise a spring and/or resilient element or are composed thereof,
and the guides (4, 5) are provided on a fixed window (7), wherein the guides (4, 5) are bonded with the inside of the fixed window (7).

2. Vehicle, in particular a motor vehicle, **characterized by** a sliding window according to Claim 1.

## Revendications

1. Vitre coulissante pour un véhicule, en particulier un véhicule automobile, avec une vitre mobile (8) qui est guidée de manière déplaçable dans des guidages (4, 5) qui s'étendent l'un par rapport à l'autre dans un angle, une installation de compensation de longueur (24 ; 26 ; 27 ; 28 ; 29) étant prévue pour la vitre mobile (8) qui comprend entre la vitre mobile (8) et un guidage (5) un ou plusieurs éléments de compensation (24 ; 26 ; 27 ; 28 ; 29),
**caractérisée**
**en ce qu'**un ou plusieurs ou tous les éléments de compensation (24 ; 26 ; 27 ; 28 ; 29) comprennent un ressort et/ou un élément résiliant ou sont formés par ceux-ci,
et **en ce que** les guidages (4, 5) sont prévus sur une vitre fixe (7), les guidages (4, 5) étant collés avec la face intérieure de la fenêtre fixe (7).

2. Véhicule, notamment véhicule automobile, **caractérisé par** une vitre coulissante selon la revendication 1.
